# EUROPÄISCHE PATENTSCHRIFT

(11) **EP 1 783 747 B1**
(45) Veröffentlichungstag und Bekanntmachung des Hinweises auf die Patenterteilung: **10.03.2010**
(21) Anmeldenummer: 06018922.2
(22) Anmeldetag: 09.09.2006
(51) Int. Cl.: G11B 5/55, G11B 5/48

(54) **Positioniergerät**
Positioning apparatus
Appareil de positionnement

(30) Priorität: 29.10.2005 DE 102005051893
(43) Veröffentlichungstag der Anmeldung: 09.05.2007
(73) Patentinhaber: Dr. Johannes Heidenhain GmbH, 83301 Traunreut (DE)
(72) Erfinder: Scheglmann, Gerhard, 83324 Ruhpolding (DE); Höfer, Volker, 83301 Traunreut (DE)

(56) Entgegenhaltungen:
- US-A- 3 082 411
- US-A- 6 038 105
- US-A1- 2005 134 993
- US-B1- 6 885 457

## Beschreibung

Die Erfindung betrifft ein Positioniergerät gemäß dem Oberbegriff des Anspruchs 1, welches insbesondere zur präzisen Bewegung eines Schwenkarmes für einen Servo-Track-Writer geeignet ist.

Derartige Positioniergeräte werden, wie oben erwähnt, häufig in Servo-Track-Writern (STW) eingesetzt, wo die Spuren oder Tracks für magnetisierbare Festplatten eingerichtet, beziehungsweise geschrieben werden. Dabei wird im STW durch ein Positioniergerät eine Welle geschwenkt, an der ein Schwenkarm befestigt ist. An dessen Ende ist ein Schreibkopf vorgesehen, der letztlich durch die Schwenkbewegung der Welle bewegt und hochpräzise positioniert wird, so dass möglichst viele Spuren pro Flächeneinheit der Festplatte konfiguriert werden können. Die Anzahl der Spuren, die pro Flächen- beziehungsweise Durchmessereinheit (Tracks per Inch) eingerichtet sind, ist ein Maß für die Speicherkapazität von Festplatten. Aus diesem Grund werden permanent Anstrengungen unternommen, eine möglichst enge Spureneinteilung zu erreichen. Damit eine Konfiguration von Festplatten mit enger Spureneinteilung beim Festplattenhersteller wirtschaftlich vorgenommen werden kann, muss eine exakte Positionierung des Schwenkarmes des STW in sehr kurzer Zeit möglich sein (Seek and Settle Time).

In der Offenlegungsschrift DE 103 57 295 der Anmelderin ist ein Positioniergerät gezeigt, welches zwei Lagereinheiten, bestehen aus jeweils zwei Kugellagern, zur Lagerung einer Welle aufweist. Damit die Welle statisch bestimmt gelagert ist, sind durch entsprechende Passungen dort Lager axial verschieblich im Gehäuse des Positioniergeräts angeordnet. Bei herkömmlichen Positioniergeräten besteht die Gefahr, dass derartige Loslager nicht torsionssteif sind, das heißt, dass bei hohen Winkelbeschleunigungen tangentiale Relativbewegungen zwischen der Welle und / oder dem Gehäuse und dem Lager auftreten können.

Der Erfindung liegt die Aufgabe zugrunde, ein Positioniergerät zu schaffen welches gegenüber vorbekannten Geräten eine Verbesserung der Positioniergenauigkeit, sowie Verkürzung der Seek and Settle Zeiten ermöglicht, insbesondere auch dann, wenn die Welle des Positioniergeräts relativ zu dessen Gehäuse axialen Längenänderungen, z. B. durch Temperaturschwankungen, ausgesetzt wird oder wurde.

Diese Aufgabe wird erfindungsgemäß durch die Schaffung eines Positioniergerätes mit den Merkmalen des Patentanspruchs 1 gelöst.

Demnach umfasst das Positioniergerät ein Gehäuse und eine relativ zu diesem schwenkbare Welle, an deren einem Ende ein zu positionierendes Element, etwa ein Schwenkarm, anbringbar ist. Ferner umfasst das Positioniergerät mindestens eine Wälzlagereinheit zur Lagerung der Welle gegenüber dem Gehäuse. Ein erstes Teil der Wälzlagereinheit ist drehfest mit der Welle verbunden, wogegen ein zweites Teil der Wälzlagereinheit mit dem Gehäuse drehfest verbunden ist. Unter drehfest ist hier zu verstehen, dass in Umfangsrichtung keine relative Verschiebung der Teile der Wälzlagereinheit gegenüber der Welle und des Gehäuses im Betrieb des Positioniergeräts erfolgt. Darüber hinaus umfasst das Positioniergerät einen Schwenkantrieb, bestehend aus einem Stator und einem Rotor - wobei Stator und Rotor relativ zueinander bewegbar sind -, sowie eine Positionsmesseinrichtung bestehend aus zwei relativ zueinander bewegbaren Teilen. Der Rotor des Schwenkantriebes und ein erstes Teil der Positionsmesseinrichtung sind mit der Welle drehfest verbunden. Die Welle ist über eine an der Wälzlagereinheit befestigte Ringmembran relativ zum Gehäuse axial beweglich aber drehsteif angeordnet.

Das erfindungsgemäße Positioniergerät hat den Vorteil, dass es eine technisch einfache und wirtschaftlich günstige Bauweise erlaubt und gleichzeitig aber auch eine überaus genaue und schnelle Positionierung ermöglicht, insbesondere selbst dann, wenn die Wälzlagereinheit axialen Belastungen ausgesetzt wird. Durch die Erfindung wird insbesondere auch das Regelverhalten des Positioniergerätes verbessert, so dass dadurch die Positionierung optimiert wird. Es wurde nämlich herausgefunden, dass obwohl die Positionsmesseinrichtung und der Schwenkantrieb drehfest mit der zu positionierenden Welle verbunden sind, eine tangentiale Relativbewegung zwischen der Welle und / oder dem Gehäuse und der Wälzlagereinheit schädlich für das Leistungsverhalten des Positioniergerätes ist.

Die Ringmembran ist bevorzugt als eine kreisförmige Scheibe mit einer zentralen Bohrung ausgestaltet. Dabei kann mit Vorteil die Ringmembran im entspannten Zustand eben oder aber alternativ hierzu räumlich gekrümmt ausgestaltet sein. Das heißt, dass dann die Ringmembran eine nicht ebene Ringscheibe ist. Insbesondere kann die Ringmembran im wirksamen Bereich des freien Radialmaßes eine Wellenform aufweisen und insbesondere sinusartig oder omegaförmig räumlich gekrümmt ausgestaltet sein.

Damit die Ringmembran die für die Funktion des Positioniergeräts wichtigen Anforderungen an die Drehsteifigkeit, die axiale Elastizität, sowie die Ansprüche bzgl. des Schwingungsverhalten erfüllt, ist die Ringmembran aus einem Metallwerkstoff hergestellt.

In bevorzugter Ausgestaltung weist die Ringmembran eine geschlossene kreisförmige Innenkontur und eine geschlossene kreisförmige Außenkontur auf.

Überraschenderweise stellte sich heraus, dass das Gesamtverhalten des Positioniergerätes bezüglich Positioniergenauigkeit und Seek and Settle Time in außerordentlichem Maße verbessert wird, wenn die Bauweise des Positioniergerätes gemäß der erfindungemäßen Lehre verändert wird.

Mit Vorteil umfasst das zweite Teil der Wälzlagereinheit eine Buchse - bzw. ist als eine Buchse ausgestaltet-, an der die Ringmembran etwa durch eine Klemmverbindung oder eine Klebeverbindung drehfest befestigt ist. Auf der anderen Seite kann die Ringmembran am Gehäuse drehfest geklemmt bzw. befestigt werden. Zwischen den Befestigungs- bzw. Klemmbereichen ist ein freier Bereich, welcher letztlich für das Verformungs- und Schwingverhalten der Ringmembran maßgeblich ist. Dieser freie Bereich wird im Folgenden als freies Radialmaß bezeichnet. Im Bereich des freien Radialmaßes kann sich die Ringmembran in axialer Richtung verformen.

In weiterer Ausgestaltung der Erfindung ist die Ringmembran derart ausgeführt, dass die radiale Abmessung des freien Bereichs der Ringmembran mindestens 30-mal, insbesondere mindestens 40-mal bzw. 50-mal größer ist als die Dicke der Ringmembran im Bereich des freien Radialmaßes. Durch die vergleichsweise geringe Dicke der Ringmembran ist nicht nur eine gute axiale Beweglichkeit der Welle relativ zum Gehäuse gegeben, sondern es wird auch das Schwingungsverhalten positiv beeinflusst. Um für die Positioniergeräte das volle Potential derartig genauer Positionsmesseinrichtungen ausschöpfen zu können, muss nämlich die Ringmembran auch bezüglich ihres Schwingungsverhaltens optimiert sein. Aus diesem Grund ist die Ringmembran so ausgestaltet, dass durch deren Verwendung im Positioniergerät keine Reduzierung der Resonanzfrequenz des Positioniergeräts als Ganzes erfolgt. Die in Betracht kommenden Positioniergeräte weisen häufig eine Resonanzfrequenz im Bereich von 0,5 bis 20 kHz, insbesondere im Bereich von 1 kHz bis 10 kHz auf.

Zur Dämpfung von Frequenzspitzen kann im Zusammenhang mit der Optimierung des Schwingungsverhaltens des Positioniergerätes die Ringmembran derart ausgestaltet sein, dass diese aus mehreren übereinander liegenden Schichten besteht, die beispielsweise aus unterschiedlichem Materialien bestehen können. Bei dieser alternativen Schicht-Bauweise der Ringmembran entstehen bei deren Verformung innere Reibungskräfte, welche letztlich dämpfend wirken. Dabei können auch Kunststoff- oder Elastomerwerkstoffe eingesetzt werden.

Die erfindungsgemäße Bauweise erweist sich als besonders vorteilhaft, wenn die Welle aus einem Material besteht, dessen Wärmeausdehnungskoeffizient sich von dem des Materials des Gehäuses unterscheidet. Häufig darf bei derartigen Positioniergeräten die Welle nicht magnetisch sein und muss daher aus einem entsprechenden Material hergestellt werden. Üblicherweise werden daher für die Welle Keramik-Materialien oder nichtmagnetische Metall- insbesondere Stahllegierungen verwendet.

Die erfindungsgemäße Konstruktion ist besonders für Positioniergeräte, die mit hochempfindlichen Positionsmesseinrichtungen ausgestattet sind von Vorteil. Derartige Positionsmesseinrichtungen können mit einer fotoelektrischen Abtastung, insbesondere nach einem interferentiellen Messprinzip, arbeiten.

Weitere Vorteile der Erfindung werden bei der nachfolgenden Beschreibung eines Ausführungsbeispiels anhand von Figuren deutlich werden.

Es zeigen die
- Figur 1: eine Schnittdarstellung durch das erfindungsgemäße Positioniergerät,
- Figur 2: eine Detailzeichnung der Schnittdarstellung,
- Figur 3: eine Detailzeichnung mit einer Darstellung der Verformung der Ringmembran.

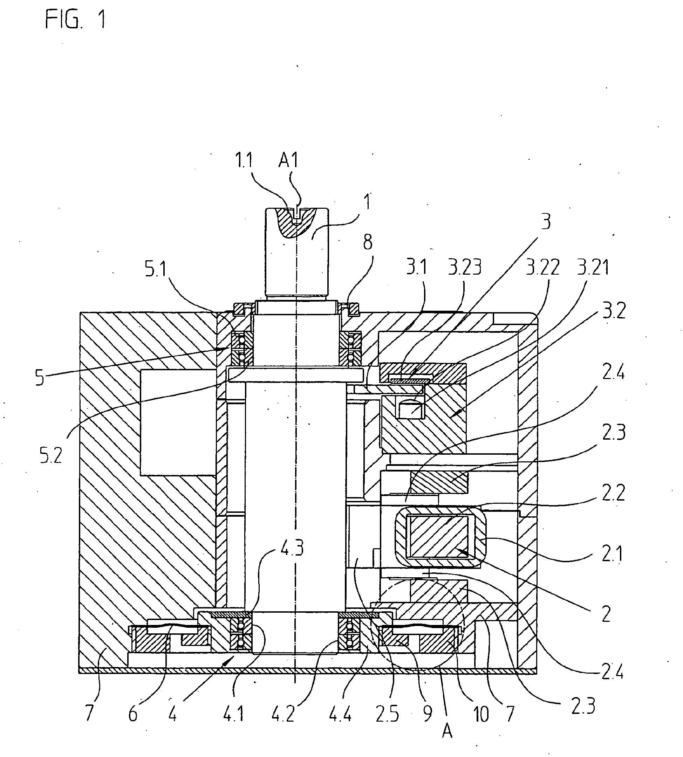

In der Figur 1 ist ein Positioniergerät dargestellt, wie es im Zusammenhang mit STWs eingesetzt wird. Eine Welle 1 ist demnach um eine Achse A1 schwenkbar und weist ein Wellenende 1.1 auf, an dem ein, in der Figur 1 nicht dargestellter, Schwenkarm zum Beschreiben einer Festplatte befestigt werden kann. Am Durchtritt der Welle 1, die im gezeigten Ausführungsbeispiel aus nicht-magnetischem Federstahl gefertigt ist, durch ein Gehäuse 7 ist eine Dichtung 6 angebracht. Das Gehäuse 7 ist im gezeigten Ausführungsbeispiel aus einer Aluminiumlegierung hergestellt.

Die Schwenkbewegung, im gezeigten Ausführungsbeispiel ist ein Schwenkbereich von ± 90° möglich, wird durch einen sogenannten Voice Coil Motor 2, einem elektrischen Direktantrieb, eingeleitet. Das Primärteil des Voice Coil Motors 2, welches im gezeigten Beispiel als Rotor innerhalb des Schwenkbereiches arbeitet, besteht aus einer Kupferspule 2.1, die einen ferromagnetischen Kern 2.2 umschließt. Der ferromagnetische Kern 2.2 erstreckt sich, entsprechend dem Schwenkbereich, entlang einer Teilkreislinie. Die Windungen der Kupferspule 2.1 sind dabei so ausgeführt, dass sie parallel zur Zeichenebene in der Figur 1 zu liegen kommen. Im Betrieb des Voice Coil Motors 2 bleibt der ferromagnetische Kern 2.2 ortsfest, während die Kupferspule 2.1 eine Schwenkbewegung entlang der Teilkreislinie ausführt. An der Kupferspule 2.1 ist ein Zwischenstück 2.5 befestigt, das mit der Welle 1 drehfest verbunden ist. Auf diese Weise wird das Drehmoment des Voice Coil Motors 2 für die Schwenkewegung in die Welle 1 eingeleitet. Die Kupferspule 2.1 und das Zwischenstück 2.5 können somit dem Primärteil beziehungsweise dem Rotor des Voice Coil Motors 2 zugeordnet werden.

Das Sekundärteil besteht aus Permanentmagneten 2.4, welche auf Magnetträgern 2.3 aus ferromagnetischem Werkstoff entlang der Teilkreislinie befestigt sind. Das Sekundärteil wirkt im Betrieb des Positioniergerätes wie eine Drehmomentstütze und nimmt nicht an der Schwenkbewegung der Welle 1 teil und kann daher im gezeigten Ausführungsbeispiel auch als Stator bezeichnet werden. Der Voice Coil Motor 2 arbeitet demnach nach dem Prinzip eines synchronen Direktantriebs.

Alternativ dazu kann das Primärteil des Voice Coil Motors 2 als eine Leiterplatte ausgestaltet sein, wobei dann Leiterbahnen als Windung dienen.

Der Schwenkwinkel der Welle 1 wird von einer Positionsmesseinrichtung 3 gemessen, die nach einem ähnlichen Wirkprinzip arbeitet, wie es in der Offenlegungsschrift EP 0 978 708 A1 der Anmelderin beschrieben ist. Die Positionsmesseinrichtung 3 besteht demzufolge aus einem transparenten Phasengitter 3.1, welches die Form eines Segments einer Ringscheibe hat, so dass der gesamte Schwenkbereich abgetastet werden kann. Das transparente Phasengitter 3.1 ist dabei verdrehfest mit der Welle 1 verbunden, so dass dieses an den Schwenkbewegungen der Welle 1 teilnimmt.

Demgegenüber liegt die nicht drehbare Abtasteinheit 3.2 der Positionsmesseinrichtung 3. Die Abtasteinheit 3.2 besteht aus einer Lichtquelle 3.21, welche beispielsweise als LED ausgestaltet ist, einer Kondensorlinse 3.22 und einem Maßstabssegment 3.23, sowie (in der Figur 1 nicht dargestellten) Fotodetektoren zum Empfangen der modulierten Lichtstrahlen. Das Maßstabssegment 3.23 ist als Reflexionsphasengitter beziehungsweise als Stufengitter ausgebildet. Das heißt, dass auf einer reflektierenden Oberfläche reflektierende Striche aufgebracht sind, im gezeigten Beispiel, mit einer Höhe von 0,2 µm. Dadurch, dass das Maßstabssegment 3.23 nicht an der Schwenkbewegung teilnimmt und so stets der Lichtquelle 3.21 gegenüber liegt, kann dieses, verglichen mit dem schwenkbaren Phasengitter 3.1, klein ausgeführt werden.

Das von der als LED ausgestalteten Lichtquelle 3.21 erzeugte Licht tritt im Betrieb des Positioniergerätes zunächst durch die Kondensorlinse 3.22 und danach durch das transparente Phasengitter 3.1, welches gebeugte Strahlenanteile erzeugt und eine Phasenänderung der Lichtwellen verursacht. Die derart veränderten Lichtstrahlen gelangen sodann auf das Maßstabssegment 3.23 in Form des Reflexionsphasengitters. Dort werden sie erneut gebeugt und es tritt eine weitere Phasenänderung der Lichtwellen auf. Die reflektierten und gebeugten Lichtstrahlen treten dann wieder durch das transparente Phasengitter 3.1 und werden erneut gebeugt und interferieren. Die derart modulierten Strahlenbündel treffen dann auf Fotodetektoren, die sich im Bereich der Lichtquelle 3.21 befinden, und in der Schnittdarstellung der Figur 1 nicht sichtbar sind. Die Fotodetektoren wandeln die Lichtsignale in elektrische Signale um, welche danach zur Gewinnung der Lageinformationen entsprechend weiterverarbeitet werden. Die Verwendung des vergleichsweise kleinen Maßstabssegments 3.23 als nicht rotierendes Bauteil hat insbesondere den Vorteil, dass die Toleranzen bezüglich des Planschlages des Maßstabssegments 3.23 nicht so eng gewählt werden müssen als dies der Fall wäre, wenn das Maßstabssegment 3.23 im Betrieb rotieren würde.

In einer alternativen Ausgestaltung der Positionsmesseinrichtung 3 umfasst die Abtasteinheit 3.2 ein sog. VCSEL (Vertical Cavity Surface Emitting Laser) als Lichtquelle 3.21. Von dieser Lichtquelle 3.21 wird ein Strahlenbündel emittiert, das sich entlang der Richtung einer optischen Achse ausbreitet. Im Wesentlichen handelt es sich beim emittierten Strahlenbündel vorzugsweise um eine TEM 00 Mode eines Gaußschen Strahles, der vom verwendeten VCSEL emittiert wird. Das emittierte Strahlenbündel weist aufgrund der VCSEL-Abstrahlcharakteristik eine bestimmte Divergenz auf und wird mittels der Kondensorlinse 3.22 umgeformt. Die Strahlumformung des emittierten, divergenten Strahlenbündels erfolgt vorzugsweise dergestalt, dass nach der Kondensorlinse 3.22 ein annähernd kollimiertes Strahlenbündel vorliegt, das in einem bestimmten Abstand von der Kondensorlinse 3.22 eine Strahltaille besitzt. Als Strahltaille sei in diesem Zusammenhang diejenige Stelle im Strahlquerschnitt entlang der Strahlausbreitungsrichtung verstanden, an der das Strahlenbündel seine minimale Fläche bzw. Querausdehnung aufweist. Im Bereich der Strahltaille ist das Phasengitter 3.1 angeordnet, auf welches das umgeformte Strahlenbündel auftrifft. Die Anordnung des Phasengitters 3.1 an dieser Stelle hat den Vorteil, dass dadurch die Anbautoleranz, sowohl in radialer bzw. tangentialer Richtung, wie auch in Richtung der Strahlausbreitung, also in axialer Richtung, vergrößert wird. Grundsätzlich ist für eine hohe Anbautoleranz in dieser Richtung eine Beleuchtung des Phasengitters 3.1 mit einem Strahlenbündel geringer Divergenz und einem kleinem Strahldurchmesser anzustreben. Da sich diese Größen bei einer vorgegebenen Wellenlänge nicht beliebig minimieren lassen, ist ein Kompromiss für die optimale Anordnung des Phasengitters 3.1 zu finden. Ein derartiger Kompromiss ergibt sich durch die Anordnung des Phasengitters 3.1 in der Strahltaille des emittierten bzw. umgeformten Strahlenbündels, wo das Produkt aus Divergenz und Strahldurchmesser der TEM 00 Mode eines Gaußschen Strahles ein Minimum aufweist. Das Phasengitter 3.1 bewirkt eine Aufspaltung des einfallenden Strahlenbündels in erste und zweite Teilstrahlenbündel, die sich von der optischen Achse weg ausbreiten. Die so veränderten Strahlenbündel treffen, wie im Zusammenhang mit der ersten Alternative der Positionsmesseinrichtung 3 bereits beschrieben, auch hier auf die Fotodetektoren, die sich im Bereich der Lichtquelle 3.21 befinden. Durch die Fotodetektoren werden die Lichtsignale in positionsabhängige elektrische Signale umgewandelt.

Gerade bei der Verwendung einer derartig hochauflösenden interferentiellen Positionsmessseinrichtung 3 ist eine Optimierung der mechanisch wirkenden Bauteile von besonderem Vorteil, um eine möglichst hohe Steigerung der Genauigkeit und der Schnelligkeit des Positioniergerätes in seiner Gesamtheit zu erreichen.

An der Welle 1 befinden sich innerhalb des Gehäuses 7 zwei Wälzlagereinheiten 4, 5, welche im gezeigten Ausführungsbeispiel jeweils zwei Kugellager 4.1, 4.2, 5.1, 5.2 umfassen. Die Wälzlagereinheit 5 ist so montiert, dass diese als Festlager dient, also als eine axial starre Lagerstelle ausgestaltet ist.

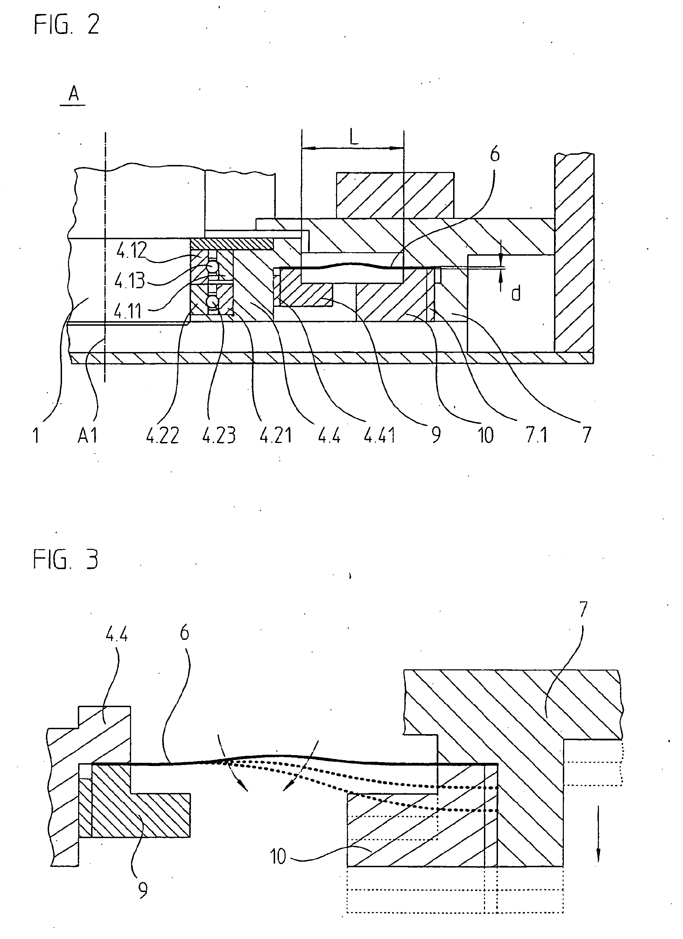

Die Wälzlagereinheit 4 umfasst neben den beiden genannten Kugellagern 4.1, 4.2 eine Abdeckscheibe 4.3, und eine Buchse 4.4. Die beiden Kugellager 4.1, 4.2 der Wälzlagereinheiten 4 bestehen jeweils, gemäß der Figur 2, aus einem Innenring 4.11, 4.21 und einem Außenring 4.21, 4.22. Die Innenringe 4.11, 4.21 und die Außenringe 4.12, 4.22 sind aus Lagerstahl gefertigt. Darüber hinaus umfasst jedes Kugellager 4.1, 4.2 als Wälzkörper Kugeln 4.13, 4.23, welche beispielsweise aus keramischem Material bestehen. Damit sichergestellt ist, dass keine relative Bewegung zwischen den Innenringen 4.11, 4.21 und der Welle 1, bzw. den Außenringen 4.12, 4.22 und der Buchse 4.4 erfolgt, sind an diesen Stellen die beiden Kugellager 4.1, 4.2 mit der Welle 1 bzw. der Buchse 4.4 drehfest verklebt.

Der Wärmeausdehnungskoeffizient der Aluminiumlegierung des Gehäuses 7 unterscheidet sich von dem Wärmeausdehnungskoeffizienten des Federstahls der Welle 1. Wenn nun das Positioniergerät zum Beispiel beim Transport oder im Betrieb Temperaturen ausgesetzt ist, welche sich von den Temperaturen während der Montage unterscheiden, so wird sich die Welle 1 relativ zum Gehäuse 7 axial ausdehnen oder verkürzen. Damit in diesen Fällen keine übermäßigen axialen Spannungen entstehen, ist zwischen der Wälzlagereinheit 4 und dem Gehäuse 7 eine Ringmembran 6 angeordnet. Würden unzulässig hohe Spannungen auftreten, so würden die Laufrillen der Kugellager 4.1, 4.2 bei der Verwendung von Kugeln 4.13, 4.23 aus vergleichsweise hartem Keramikmaterial plastisch verformt werden, so dass dort minimale bleibende Abdrücke entstünden. Diese Abdrücke oder Eindellungen würden die Positioniergenauigkeit der Welle 1 stören und führten letztlich zu einer Verschlechterung des Betriebesverhaltens des Positioniergerätes. Aber auch bei anderen Materialpaarungen in den Wälzlagereinheiten 4, 5 würden, wenn auch minimale, Schädigungen eintreten, welche sich dennoch negativ auf das Betriebsverhalten des Positioniergerätes auswirken würden.

Die Ringmembran 6 ist hier, geometrisch betrachtet, ein nicht ebener Ringkörper mit geschlossener ohne Unterbrechungen umlaufender kreisförmiger Innen- und Außenkontur. Im vorgestellten Ausführungsbeispiel weist die Ringmembran 6 eine Dicke d von 0,2 mm auf, bei einem Innendurchmesser von 40 mm und einem Außendurchmesser von 75 mm. Die Ringmembran 6 besteht hier aus einem Federstahlblech.

Die Buchse 4.4 weist ein Außengewinde 4.41 auf. Bei der Montage des Positioniergerätes wird zunächst die Ringmembran 6 über die Buchse 4.4 gelegt, so dass die Ringmembran 6 an einem Absatz der Buchse 4.4 anschlägt. Danach wird eine Mutter 9 mit einem Innengewinde auf das Außengewinde 4.41 der Buchse 4.4 gedreht bis die Ringmembran 6 gegen den Absatz der Buchse 4.4 umlaufend klemmend befestigt ist. Die radiale Ausdehnung des inneren Klemmbereiches liegt im gezeigten Ausführungsbeispiel auf jeder Seite bei jeweils 2,5 mm.

Analog dazu wird der Außenumfang der Ringmembran 6 gegen einen Absatz im Gehäuse 7 umlaufend geklemmt. Zu diesem Zweck weist das Gehäuse 7 ein Innengewinde 7.1 auf, welches mit einem Außengewinde einer Ringschraube 10 zusammenwirkt, dabei erstreckt sich der Klemmbereich in radialer Richtung jeweils auf 2,5 mm.

Die Ringmembran 6 weist also einen Innenradius von 20 mm (Innendurchmesser 40 mm) und einen Außenradius von 37,5 mm (Außendurchmesser 75 mm) auf. Entsprechend kann für die Ringmembran 6 demnach ein freies Radialmaß L von 37,5 mm - 2,5 mm - 2,5 mm - 20 mm = 12,5 mm berechnet werden. Als freies Radialmaß L ist also die freie radiale Länge zwischen den Klemmbereichen zu verstehen, welche letztlich für das Verformungs- und Schwingverhalten der Ringmembran 6 maßgeblich ist. Im Bereich des freien Radialmaßes L kann sich demzufolge die Ringmembran 6 in axialer Richtung verformen. Zur Verbesserung der Verformungseigenschaften der Ringmembran 6 ist diese im Bereich des freien Radialmaßes L räumlich gekrümmt ausgestaltet. Insbesondere ist die Ringmembran 6 dort im Wesentlichen sinusförmig geformt, wobei die Übergänge in die Klemmbereiche als stetige, weiche Übergänge ausgestaltet sind. Im vorgestellten Ausführungsbeispiel weist die Ringmembran 6 eine Überhöhung, also eine maximale Abweichung von der ebenen Geometrie, von 0,6 mm auf.

Dadurch, dass die Ringmembran 6 zweimal über 360° umlaufend innen und außen geklemmt ist, führt die räumlich gekrümmte Ausgestaltung der Ringmembran 6 nicht zu einer Verschlechterung der Steifigkeit in radialer Richtung.

In der Figur 3 ist die Ringmembran 6 in verschieden Verformungszuständen gezeigt, wobei diese Verformungszustände unterschiedlichen Temperaturen des Positionsmessgerätes entsprechen können. Nachdem hier die Ringmembran 6 sinusförmig geformt ist, weist die Geometrie der Ringmembran 6 innerhalb des freien Radialmaßes L zwei Wendepunkte auf. Die gekrümmte durchgezogene Linie soll die nicht verformte Ringmembran 6 darstellen, so wie sie montiert wurde. Wenn sich nun auf Grund von Temperaturänderungen, z. B. während des Transports des Positionsmessgerätes, das Gehäuse 7 gegenüber der Welle 1 ausdehnt, so verformt sich die Ringmembran 6 entsprechend den gestrichelt dargestellten Verläufen. Infolge der Verformungen wandern die Wendepunkte entlang den strich-punktierten Pfeilen mit fortschreitender Verformung in der Weise, dass diese immer enger zusammen liegen. Eine derartige Geometrie hat sich als besonders vorteilhaft im Hinblick auf die geforderte axiale Beweglichkeit aber auch für eine hohe Drehsteifigkeit erwiesen.

Die über die Ringmembran 6 erreichte Verbindung zwischen Wälzlagereinheit 4 und dem Gehäuse 7 ist demzufolge radial steif und auch tangential bzw. torsional, also in Umfangsrichtung, drehsteif. Dies ist einerseits für die exakte Bestimmung der Winkelstellung der Welle 1 von herausragender Bedeutung. Andererseits muss aber auch ein hervorragendes Regelverhalten gegeben sein, um kurze Seek and Settle Zeiten zu erreichen. Für das Regelverhalten ist auch das Schwingungsverhalten des Systems wichtig. Deshalb ist es notwendig das Positioniergerät so zu gestalten, dass entsprechende Schwingungen der Welle 1 möglichst hochfrequent sind, so dass Resonanzeffekte nicht auftreten. In erster Näherung kann das Positioniergerät schwingungstechnisch wie ein gekoppeltes Federpendel mit Federn unterschiedlicher Steifigkeit behandelt werden. Die niedrigste Resonanzfrequenz ist bei diesem Modell abhängig von der weichsten Feder. Aus diesem Grund weist die Ringmembran 6 in radialer und torsionaler Richtung eine höhere Federsteifigkeit auf als die Wälzlagereinheit 4 selbst, so dass durch die Ringmembran 6 keine Verlagerung der Resonanzfrequenz in einen niedrigeren Frequenzbereich bewirkt wird. Dadurch wird die Seek and Settle Time weiterhin optimiert. Die Resonanzfrequenz des hier vorgestellten Positioniergerätes liegt bei etwa 1 kHz.

Im gezeigten Ausführungsbeispiel ist das Verhältnis V von freiem Radialmaß L zur Dicke d der Ringmembran 6:
V = L/d = 12,5 mm / 0,2 mm = 62,5

Dieses Verhältnis V ist eine entscheidende Kenngröße für das Schwingungs- und Lagerverhalten.

## Patentansprüche

1. Positioniergerät umfassend
ein Gehäuse (7),
eine relativ zum Gehäuse (7) schwenkbare Welle (1) an deren einem Ende (1.1) ein zu positionierendes Element anbringbar ist,
eine Wälzlagereinheit (4) zur Lagerung der Welle (1) gegenüber dem Gehäuse (7), wobei ein erstes Teil (4.11, 4.21) der Wälzlagereinheit (4) drehfest mit der Welle (1) verbunden ist, und ein zweites Teil (4.21, 4.22, 4.4) der Wälzlagereinheit (4) mit dem Gehäuse (7) drehfest verbunden ist,
einen Schwenkantrieb (2), bestehend aus einem Stator (2.3, 2.4) und einem Rotor (2.1, 2.5), wobei der Rotor (2.1, 2.5) zum Stator (2.3, 2.4) relativ bewegbar ist,
eine Positionsmesseinrichtung (3), bestehend aus zwei relativ zueinander bewegbaren Teilen (3.1, 3.2), wobei
der Rotor (2.1, 2.5) des Schwenkantriebes (2) und ein erstes Teil (3.1) der Positionsmesseinrichtung (3) mit der Welle (1) drehfest verbunden sind, **dadurch gekennzeichnet, dass**
die Welle (1) über eine an der Wälzlagereinheit (4) und am Gehäuse (7) befestigte Ringmembran (6) relativ zum Gehäuse (7) axial beweglich aber drehsteif angeordnet ist.

2. Positioniergerät, gemäß dem Anspruch 1, **dadurch gekennzeichnet, dass** die Ringmembran (6) räumlich gekrümmt ausgestaltet ist.

3. Positioniergerät, gemäß dem Anspruch 1 oder 2, **dadurch gekennzeichnet, dass** die Ringmembran (6) aus einem Metallwerkstoff hergestellt ist.

4. Positioniergerät, gemäß einem der vorhergehenden Ansprüche, **dadurch gekennzeichnet, dass** die Ringmembran (6) an der Wälzlagereinheit (4) und / oder am Gehäuse (7) durch eine Klemmverbindung oder eine Klebverbindung befestigt ist.

5. Positioniergerät, gemäß einem der vorhergehenden Ansprüche, **dadurch gekennzeichnet, dass** das zweite Teil (4.21, 4.22, 4.4) der Wälzlagereinheit (4) eine Buchse (4.4) umfasst, an der die Ringmembran (6) befestigt ist.

6. Positioniergerät, gemäß dem Anspruch 4 und 5, **dadurch gekennzeichnet, dass** die Buchse (4.4) ein Außengewinde (4.41) aufweist zur Aufnahme einer Mutter (9), so dass die Ringmembran (6) durch die Mutter (9) an die Buchse (4.4) klemmbar ist.

7. Positioniergerät, gemäß dem Anspruch 4, **dadurch gekennzeichnet, dass** das Gehäuse (7) ein Innengewinde (7.1) aufweist zur Aufnahme einer Ringschraube (10), so dass die Ringmembran (6) durch die Ringschraube (10) an das Gehäuse (7) klemmbar ist.

8. Positioniergerät, gemäß einem der vorhergehenden Ansprüche, **dadurch gekennzeichnet, dass** die Welle (1) aus einem Material besteht, dessen Wärmeausdehnungskoeffizient sich von dem des Materials des Gehäuses (7) unterscheidet.

9. Positioniergerät, gemäß einem der vorhergehenden Ansprüche, **dadurch gekennzeichnet, dass** das freie Radialmaß (L) der Ringmembran (6) mindestens 30-mal größer ist als die Dicke (d) der Ringmembran (6).

10. Positioniergerät, gemäß einem der vorhergehenden Ansprüche, **dadurch gekennzeichnet, dass** die Positionsmesseinrichtung (3) mit einer fotoelektrischen Abtastung, insbesondere nach einem interferentiellen Messprinzip, arbeitet.

11. Positioniergerät, gemäß Anspruch 10, **dadurch gekennzeichnet, dass** das erste Teil (3.1) der Positionsmesseinrichtung (3) als transparentes Phasengitter ausgeführt ist, und das zweite Teil (3.2) der Positionsmesseinrichtung (3) ein Reflexionsphasengitter (3.23) umfasst.

12. Positioniergerät, gemäß Anspruch 11, **dadurch gekennzeichnet, dass** das erste Teil (3.1) der Positionsmesseinrichtung (3) als Reflexionsphasengitter ausgeführt ist, und das zweite Teil (3.2) der Positionsmesseinrichtung (3) ein transparentes Phasengitter umfasst.

## Claims

1. A positioning unit comprising
- a housing (7),
- a shaft (1), which can be pivoted relative to the housing (7), to the one end (1.1) of which an element, which is to be positioned, can be attached,
- a ball bearing unit (4) for supporting the shaft (1) relative to the housing (7), wherein a first part (4.11, 4.21) of the ball bearing unit (4) is connected to the shaft (1) so as to be torque proof, and a second part (4.21, 4.22, 4.4) of the ball bearing unit (4) is connected to the housing (7) so as to be torque proof,
- a pivot drive (2) consisting of a stator (2.3, 2.4) and a rotor (2.1, 2.5), wherein the rotor (2.1, 2.5) is capable of being moved relative to the stator (2.3, 2.4),
- a position measuring device (3) consisting of two parts (3.1, 3.2), which are capable of being moved relatively to one another, wherein
the rotor (2.1, 2.5) of the pivot drive (2) and a first part (3.1) of the position measuring device (3) are connected to the shaft (1) so as to be torque proof, **characterized in that**
the shaft (1) is arranged so as to be capable of being moved in axial direction relative to the housing (7), yet so as to be torsion proof, by means of an annular membrane (6), which is attached to the ball bearing unit (4) and to the housing (7).

2. The positioning unit according to claim 1,
**characterized in that** the ring membrane (6) is embodied so as to be three-dimensionally curved.

3. The positioning unit according to claim 1 or 2, **characterized in that** the ring membrane (6) is made from a metal material.

4. The positioning unit according to one of the preceding claims, **characterized in that** the ring membrane (6) is attached to the ball bearing unit (4) and/or to the housing (7) by means of a clamping connection or an adhesive connection.

5. The positioning unit according to one of the preceding claims, **characterized in that** the second part (4.21, 4.22, 4.4) of the ball bearing unit (4) encompasses a connector (4.4), to which the annular membrane (6) is attached.

6. The positioning unit according to claim 4 and 5, **characterized in that** the connector (4.4) encompasses an external thread (4.41) for accommodating a screw nut (9), so that the annular membrane (6) can be clamped to the connector (4.4) by means of the screw nut (9).

7. The positioning unit according to claim 4, **characterized in that** the housing (7) encompasses an internal thread (7.1) for accommodating an eye bolt (10), so that the annular membrane (6) is capable of being clamped to the housing (7) by means of the eye bolt (10).

8. The positioning unit according to one of the preceding claims, **characterized in that** the shaft (1) consists of a material, the heat expansion coefficient of which differs from the heat expansion coefficient of the material of the housing (7).

9. The positioning unit according to one of the preceding claims, **characterized in that** the free radial measure (L) of the annular membrane (6) is at least 30 times greater than the thickness (d) of the annular membrane (6).

10. The positioning unit according to one of the preceding claims, **characterized in that** the position measuring device (3) operates with a photoelectric scanning, in particular according to an interferential measuring principle.

11. The positioning unit according to claim 10, **characterized in that** the first part (3.1) of the position measuring device (3) is embodied as a transparent phase grid and **in that** the second part (3.2) of the position measuring device (3) comprises a reflection phase grid (3.23).

12. The positioning unit according to claim 11, **characterized in that** the first part (3.1) of the position measuring device (3) is embodied as a reflection phase grid and **in that** the second part (3.2) of the position measuring device (3) comprises a transparent phase grid.

## Revendications

1. Appareil de positionnement, comprenant
- un boîtier (7),
- un arbre (1) pivotant par rapport au boîtier (7), à l'une des extrémités (1.1) duquel peut être relié un élément à positionner,
- une unité de palier de roulement (4) pour le montage de l'arbre (1) par rapport au boîtier (7), dans laquelle une première pièce (4.11, 4.12) de l'unité de palier de roulement (4) est reliée à l'arbre (1) de façon bloquée en rotation, et une deuxième pièce (4.21, 4.22, 4.4) de l'unité de palier de roulement (4) est reliée au boîtier (7) de façon bloquée en rotation,
- un entraînement en pivotement (2), constitué d'un stator (2.3, 2.4) et d'un rotor (2.1, 2.5), dans lequel le rotor (2.1, 2.5) est mobile par rapport au stator (2.3, 2.4),
- un dispositif de mesure de position (3), constitué de deux pièces (3.1, 3.2) mobiles l'une par rapport à l'autre, dans lequel
le rotor (2.1, 2.5) de l'entraînement en pivotement (2) et une première pièce (3.1) du dispositif de mesure de position (3) sont reliés à l'arbre (1) de façon bloquée en rotation,
**caractérisé en ce que**
l'arbre (1) est disposé de façon axialement déplaçable par rapport au boîtier (7) mais rigide en rotation, par le biais d'une membrane annulaire (6) fixée au boîtier (7) et à l'unité de palier de roulement (4).

2. Appareil de positionnement selon la revendication 1, **caractérisé en ce que** la membrane annulaire (6) est conçue de façon spatialement courbe.

3. Appareil de positionnement selon l'une des revendications 1 ou 2, **caractérisé en ce que** la membrane annulaire (6) est fabriquée dans une matière métallique.

4. Appareil de positionnement selon l'une des revendications précédentes, **caractérisé en ce que** la membrane annulaire (6) est fixée à l'unité de palier de roulement (4) et/ou au boîtier (7) par un assemblage par blocage ou par un assemblage par collage.

5. Appareil de positionnement selon l'une des revendications précédentes, **caractérisé en ce que** la deuxième pièce (4.21, 4.22, 4.4) de l'unité de palier de roulement (4) comprend une douille (4.4), à laquelle est fixée la membrane annulaire (6).

6. Appareil de positionnement selon l'une des revendications 4 et 5, **caractérisé en ce que** la douille (4.4) comporte un filetage extérieur (4.41), pour l'admission d'un écrou (9), de sorte que la membrane annulaire (6) peut être serrée contre la douille (4.4) par l'écrou (9).

7. Appareil de positionnement selon la revendication 4, **caractérisé en ce que** le boîtier (7) comporte un filetage intérieur (7.1), pour l'admission d'une vis à anneau (10), de sorte que la membrane annulaire (6) peut être serrée contre le boîtier (7) par la vis à anneau (10).

8. Appareil de positionnement selon l'une des revendications précédentes, **caractérisé en ce que** l'arbre (1) est constitué d'un matériau dont le coefficient d'expansion thermique se différencie de celui du matériau du boîtier (7).

9. Appareil de positionnement selon l'une des revendications précédentes, **caractérisé en ce que** la mesure radiale libre (L) de la membrane annulaire (6) est au moins 30 fois supérieure à l'épaisseur (d) de la membrane annulaire (6).

10. Appareil de positionnement selon l'une des revendications précédentes, **caractérisé en ce que** le dispositif de mesure de position (3) travaille avec un balayage photoélectrique, en particulier d'après un principe de mesure interférentielle.

11. Appareil de positionnement selon la revendication 10, **caractérisé en ce que** la première pièce (3.1) du dispositif de mesure de position (3) est conçue comme une grille de phase, et la deuxième pièce (3.2) du dispositif de mesure de position (3) comprend une grille de phase à réflexion (3.23).

12. Appareil de positionnement selon la revendication 11, **caractérisé en ce que** la première pièce (3.1) du dispositif de mesure de position (3) est conçue comme une grille de phase à réflexion, et la deuxième pièce (3.2) du dispositif de mesure de position (3) comprend une grille de phase transparente.
